# EUROPÄISCHE PATENTANMELDUNG

(11) **EP 4 717 072 A1**
(43) Veröffentlichungstag der Anmeldung: **01.04.2026**
(21) Anmeldenummer: 25193672.0
(22) Anmeldetag: 04.08.2025
(51) Int. Cl.: A01D 41/14

(54) **VERFAHREN ZUM EINSTELLEN EINER LANDWIRTSCHAFTLICHEN ARBEITSMASCHINE**

(30) Priorität: 25.09.2024 DE 102024127721
(71) Anmelder: CLAAS Selbstfahrende Erntemaschinen GmbH, 33428 Harsewinkel (DE)
(72) Erfinder: Neitemeier, Dennis, 59510 Lippetal (DE); Hinz, Patrick, 33428 Greffen (DE); Belau, Sven Carsten, 33332 Gütersloh (DE); Brune, Markus, 33428 Harsewinkel (DE); Klein Helmkamp, Marwin, Osnabrück (DE); Dirksen, Matthis, 48231 Warendorf (DE); Titkemeier, Daniel, 49080 Osnabrück (DE); Bönig Dr., Ingo, 33330 Gütersloh (DE); Thiesmann, Waldemar, 49080 Osnabrück (DE)
(74) Vertreter: CLAAS Gruppe

(57) **Zusammenfassung**

Die vorliegende Erfindung betrifft eine Verfahren (5000) zum Einstellen einer landwirtschaftlichen Arbeitsmaschine (1000), wobei die landwirtschaftliche Arbeitsmaschine (1000) einen optischen Sensor (1050, 1050') und ein Vorsatzgerät (1010) zum Bearbeiten einer landwirtschaftlichen Fläche umfasst, das Verfahren (5000) umfassend: Erfassen zumindest eines Bildes (4000) der bearbeiteten Fläche (1065) mittels des optischen Sensors (1050, 1050'), Detektieren einer Schleifspur (3000) des Vorsatzgeräts (1010), indem eine Schleifspurstruktur (4005) in dem zumindest einen Bild (4000) segmentiert wird, und Einstellen der landwirtschaftlichen Arbeitsmaschine (1000) basierend auf der Schleifspurstruktur (4005), so dass die detektierte Schleifspur (3000) zumindest teilweise verringert wird. Die vorliegende Erfindung betrifft ferner eine landwirtschaftliche Arbeitsmaschine (1000), die dazu eingerichtet ist, eine der hierin offenbarten Verfahren auszuführen.

## Beschreibung

Die vorliegende Erfindung betrifft ein Verfahren zum Einstellen einer landwirtschaftlichen Arbeitsmaschine. Ferner betrifft die vorliegende Erfindung eine landwirtschaftliche Arbeitsmaschine.

Aus dem Stand der Technik ist es bekannt eine landwirtschaftliche Arbeitsmaschine oder ein Vorsatzgerät der landwirtschaftlichen Arbeitsmaschine an die Umgebungsbedingungen anzupassen.

Die EP4140283A1 betrifft eine landwirtschaftliche Maschine mit einem Vorsatzgerät zum Bearbeiten einer landwirtschaftlichen Fläche und einem optischen Sensor zum Erfassen der bearbeiteten Fläche, wobei der optische Sensor als Rückfahrkamera ausgebildet und eingerichtet ist, die bearbeitete Fläche bezogen auf die Fahrtrichtung der Maschine hinter dieser zu erfassen. Die vorhandene Rückfahrkamera kann während des landwirtschaftlichen Betriebs der Maschine verwendet werden. Dabei können die Bilder der bearbeiteten Fläche hinter der Maschine ausgewertet und gegebenenfalls eine Fehlfunktion oder Fehleinstellung identifiziert werden. Beispielsweise können mittels einer Bildverarbeitungseinheit Schleifspuren des Vorsatzgeräts erkannt werden. Auf Grundlage dieser Informationen ist auch eine Höhensteuerung des Vorsatzgeräts denkbar.

Ein derartiges Einstellen der landwirtschaftlichen Arbeitsmaschine basiert jedoch lediglich auf dem bloßen Erkennen einer Schleifspur.

Eine Aufgabe der vorliegenden Erfindung ist es daher, die Verfahren derart weiterzuentwickeln, dass ein Einstellen der landwirtschaftlichen Arbeitsmaschine verbessert wird.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf ein Verfahren zum Einstellen einer landwirtschaftlichen Arbeitsmaschine. Dabei kann die landwirtschaftliche Arbeitsmaschine einen optischen Sensor und ein Vorsatzgerät zum Bearbeiten einer landwirtschaftlichen Fläche umfassen. Das Verfahren kann ein Erfassen zumindest eines Bildes einer bearbeiteten Fläche mittels des optischen Sensors umfassen. Ferner kann das Verfahren ein Detektieren einer Schleifspur des Vorsatzgeräts umfassen, indem eine Schleifspurstruktur in dem zumindest einen Bild segmentiert wird. Des Weiteren kann das Verfahren ein Einstellen der landwirtschaftlichen Arbeitsmaschine basierend auf der Schleifspurstruktur umfassen, so dass die detektierte Schleifspur zumindest teilweise verringert wird.

Die landwirtschaftliche Arbeitsmaschine kann speziell für die Ernte von Nutzpflanzen vorgesehen sein. Bei der landwirtschaftlichen Arbeitsmaschine kann es sich beispielsweise um einen Traktor oder einen Mähdrescher handeln. Es kann sich bei der landwirtschaftlichen Arbeitsmaschine insbesondere um einen Feldhäcksler mit einem Vorsatzgerät handeln. Das Vorsatzgerät kann zum Mähen, Aufnehmen und Weiterfördern von stängelartigem Erntegut, insbesondere Mais, Miscanthus oder Sorghum, verwendet werden. Bei dem Vorsatzgerät kann es sich um ein Anbaugerät handeln, dass vorderseitig (d.h. in Fahrtrichtung vorne) an der landwirtschaftlichen Arbeitsmaschine angebracht wird. Das Vorsatzgerät kann lösbar an der landwirtschaftlichen Arbeitsmaschine angebracht werden. Das Vorsatzgerät kann verstellbare, insbesondere ungleich verstellbare und/oder unterschiedlich verstellbare, Aktoren zur Durchführung der Aufnahme des Ernteguts aufweisen. Das Vorsatzgerät kann derart ausgebildet sein, dass die Position, der Abstand und/oder die Drehzahl eines oder mehrerer Aktoren des Vorsatzgerätes erfolgen kann. Zusätzlich kann die landwirtschaftliche Arbeitsmaschine mehrere Arbeitsaggregate zum Bearbeiten und Weiterleiten des Ernteguts aufweisen. Ein solches Arbeitsaggregat kann ein Häckselwerk, eine Konditioniereinrichtung bzw. Korncracker, einen Nachbeschleuniger und/oder einen Auswurfkrümmer ausbilden.

Bei dem optischen Sensor kann es sich um ein elektronisches Bauelement handeln, das eingerichtet ist, optische Informationen (bspw. Licht bzw. reflektiertes Licht) in elektrisch auswertbare Signale umzuwandeln. Dabei kann der optische Sensor derart eingerichtet und vorgesehen sein, eine Feldumgebung, insbesondere den Bereich bzw. die landwirtschaftliche Fläche in einer Umgebung der landwirtschaftlichen Arbeitsmaschine, zu erfassen. Der optische Sensor kann beispielsweise auf eine vom Vorsatzgerät bearbeitete landwirtschaftliche Fläche ausgerichtet sein. Der optische Sensor kann dabei ein oder mehrere zeitlich aufeinanderfolgende Bilder (bzw. eine Bildserie oder ein Video) der bearbeiteten Fläche erfassen. Der optische Sensor kann als (Rückfahr-)kamera ausgebildet sein. Die landwirtschaftliche Fläche kann dabei Boden, Pflanzen oder geerntete Flächen umfassen. Alternativ kann, beispielsweise bei einem Traktor oder Mähdrescher, ein Spiegelersatzsystem genutzt werden. Das Spiegelersatzsystem kann neben der Spiegelfunktion eine Schleifspurdetektion ermöglichen.

Bei der Schleifspur kann es sich um eine Spur handeln, die entsteht, wenn etwas (Bspw. ein Gerät) über den Boden gezogen wird und dadurch eine Spur auf dem Boden hinterlässt. Die Schleifspur kann beispielsweise durch das Vorsatzgerät verursacht sein, indem das Vorsatzgerät oder ein Teil des Vorsatzgeräts während der Fahrt der landwirtschaftlichen Arbeitsmaschine den Boden berührt und dabei aufgrund der Berührung eine Spur hinterlässt. Mit anderen Worten kann die Schleifspur auftreten, wenn sich die landwirtschaftliche Arbeitsmaschine beispielsweise beim Erntevorgang kontinuierlich in eine Richtung bewegt und das Vorsatzgerät dabei kontinuierlich während des Erntevorgangs einen Kontakt mit dem Boden aufweist. Ferner kann es zu einer Erntegutstauung am Vorsatz kommen. Dabei kann die Erntegutstauung ein Aufschieben von Erntegut und Erde vor dem Vorsatzgerät verursachen. Das kann heißen, dass ein direkter Kontakt zwischen der Vorsatzgerät und dem Boden nicht stattfindet. Stattdessen wird die Schleifspur möglicherweise durch das Erntegut und die Erde, die vor dem Vorsatzgerät geschoben werden, verursacht.

Das Detektieren der Schleifspur kann bedeuten, dass mathematische Methoden bzw. Bildanalysemethoden zum Erkennen einer Spur verwendet werden. Dabei kann eine Schleifspurstruktur in dem Bild oder Video der vom Vorsatzgerät bearbeiteten Fläche segmentiert werden. Bei einer Segmentierung oder Segmentation kann es sich um die Erzeugung von inhaltlich zusammenhängenden Segmenten, Regionen und/oder Strukturen handeln. Beispielsweise kann eine Segmentierung mittels Zusammenfassens benachbarter Pixel oder Voxel entsprechend einem bestimmten Homogenitätskriterium durchgeführt werden. Bei der Schleifspurstruktur kann es sich um eine Region bzw. Struktur im Bild handeln, die ganz oder teilweise einer Schleifspur zugeordnet werden kann. Dabei kann die Schleifspurstruktur von anderen Teilen des Bildes, wie unberührtem Boden oder Pflanzen, unterschieden werden. Mit anderen Worten kann die Schleifspurstruktur ein Vorhandensein einer Schleifspur auf einem Feld beschreiben (d.h. die Wahrscheinlichkeit, ob eine Schleifspur vorliegt). Wenn ein Foto oder ein Bild von einem Feld aufgenommen wird, das möglicherweise eine Schleifspur enthält, kann die Schleifspurstruktur durch Bildverarbeitungstechniken erkannt werden. Dabei können Schwellwertverfahren, Kantenverfolgung, Clustering-Methoden oder maschinelles Lernen zum Einsatz kommen. Die segmentierte Schleifspurstruktur kann im Bild hervorgehoben werden, bspw. durch eine farbliche Markierung oder das Ausblenden des restlichen Bildes. Es können dabei spezifische Merkmale einer Schleifspur identifiziert werden, beispielsweise eine Form (meistens linienförmig oder streifenartig), Texturunterschiede (etwa glatter oder verdichteter Boden im Vergleich zu ungestörtem Boden) und/oder Farb- oder Helligkeitsunterschiede (zum Beispiel dunklere oder hellere Streifen im Bild). Durch die Analyse dieser Merkmale kann die Schleifspurstruktur im Bild, die eine Schleifspur zugeordnet werden kann, ermittelt und markiert werden. Ferner kann die Schleifspurstruktur Informationen zu diesen Merkmalen umfassen. Mittels Segmentierens kann es sein, die Schleifspur im Bild präzise zu lokalisieren und weiter zu analysieren, zum Beispiel zur Quantifizierung von Bodenverdichtungen oder zur Optimierung landwirtschaftlicher Arbeitsabläufe. Mit anderen Worten können mittels Segmentation Klassen, die Instanzen umfassen, bestimmt werden. Instanzen können andersfarbig dargestellt werden.

Das Einstellen der landwirtschaftlichen Arbeitsmaschine bzw. des Vorsatzgeräts kann bedeuten, dass eine Abhilfemaßnahme zur Beseitigung der Schleifspur eingeleitet wird. Dabei kann es sich um eine Anpassung des Schnittwinkels, eine Anpassung der Querneigung, eine Anpassung des Auflagedrucks und/oder eine Anpassung der Winkel von geteilten Ernteeinrichtungen (z.B. FlexWing-Schneiwerke oder mehrteilige Mähwerke) handeln.

Die landwirtschaftliche Arbeitsmaschine kann eine Steuerungseinheit zum Einstellen der landwirtschaftlichen Arbeitsmaschine oder des Vorsatzgeräts umfassen. Die Steuerungseinheit einer landwirtschaftlichen Arbeitsmaschine kann ein zentrales System oder Gerät sein, das die verschiedenen Funktionen und Arbeitsprozesse der landwirtschaftlichen Arbeitsmaschine auswertet, berechnet, koordiniert und/oder steuert. Die Steuerungseinheit kann Signale von Sensoren und Bedienereingaben verarbeiten und kann daraufhin die Mechanik, Elektronik oder Hydraulik der landwirtschaftlichen Arbeitsmaschine regeln. Die Steuerungseinheit kann eine Recheneinheit, insbesondere eine computerbasierte Recheneinheit, eine Bildverarbeitungseinheit und/oder einen Datenspeicher, insbesondere einen computerlesbaren Datenspeicher, aufweisen.

Das Einstellen der landwirtschaftlichen Arbeitsmaschine basierend auf der Schleifspurstruktur kann das Einstellen des Vorsatzgeräts umfassen. Dabei kann die Steuerungseinheit kommunizierend mit dem optischen Sensor verbunden sein, wobei die Steuerungseinheit zum Segmentieren einer Schleifspurstruktur basierend auf einer Bildanalyse der mittels des optischen Sensors aufgenommenen Bildserie vorgesehen und eingerichtet sein kann.

Die Steuerungseinheit kann ferner eine Bildverarbeitungseinheit für die Bildanalyse umfassen.

Mittels des Einstellens des Vorsatzgeräts kann die detektierte Schleifspur zumindest teilweise verringert oder ganzheitlich beseitigt werden. Es kann dabei möglicherweise eingestellt werden, dass das Vorsatzgerät nach dem Einstellen keinen Kontakt mehr mit dem Boden aufweist und die Schleifspur somit bei der weiteren Fahrt nicht mehr auftreten kann.

In einem weiteren Aspekt kann das Detektieren der Schleifspur ein Unterteilen des zumindest einen Bildes in Bildsektoren mittels Teilungslinien umfassen. Dabei können die Teilungslinien im Wesentlichen parallel zu einer Fahrtrichtung der landwirtschaftlichen Arbeitsmaschine ausgerichtet sein. Ferner kann das Verfahren ein Zuordnen der Schleifspurstruktur zu einem der Bildsektoren umfassen.

Die Bildsektoren können dabei Bereiche bzw. Teilbereiche des Bildes sein. Die Bildsektoren können dabei unterschiedliche oder gleiche Größen aufweisen. Mit anderen Worten kann das Bild mittels der Teilungslinien geteilt bzw. getrennt werden, so dass verschiedene Bildsektoren entstehen. Die Teilungslinien können dabei so angeordnet sein, dass sie parallel zueinander verlaufen. Vorteilhafterweise können die Teilungslinien dabei der Richtung der Schleifspur ausgerichtet sein, wobei sich die Schleifspur üblicherweise entlang einer Fahrtrichtung der landwirtschaftlichen Arbeitsmaschine erstreckt. Im Ergebnis können sich nach dem Unterteilen eine Vielzahl von Bildsektoren ergeben, wobei das Bild beispielsweise eine quadratische Form und die Bildsektoren jeweils eine rechteckige Form aufweisen können. Da die Schleifspurstruktur ebenfalls eine rechteckige Form aufweisen kann, kann besonders schnell und effizient ermittelt werden, wenn sich die Schleifspurstruktur und einer der Bildsektoren ganz oder größtenteils überschneiden.

Das Zuordnen der Schleifspurstruktur kann umfassen, dass mittels einer mathematischen Methode bestimmt wird, ob sich ein Teil (bspw. ein Flächenabschnitt) der Schleifspurstruktur in einem der Bildsektoren befindet. Beispielsweise kann die Schleifspurstruktur demjenigen Bildsektor zugeordnet werden, in dem sich ein bestimmter Prozentsatz (bspw. 70 %) der Fläche der Schleifspurstruktur befindet.

Die Bildsektoren können dabei helfen die Position der Schleifspur zu finden. Ferner kann mittels des Wissens über die Position der Schleifspur das Vorsatzgerät besser eingestellt werden. Ein Vorteil des Zuordnens zu einem Bildsektor kann es sein, dass ein verbessertes Detektieren erreicht werden kann, weil die Position der Schleifspur mittels der Bildsektoren bestimmt werden kann. Ferner kann die landwirtschaftliche Arbeitsmaschine mittels der Position besser eingestellt werden. Beispielsweise kann das Vorsatzgerät basierend auf der Position der Schleifspur eingestellt werden, indem der Teil des Vorsatzgeräts, der die Schleifspur verursacht angehoben wird.

In einem weiteren Aspekt kann die Schleifspurstruktur einem Bildsektor zugeordnet werden, wenn sich die Schleifspurstruktur zumindest teilweise für eine vordefinierte Zeit in dem Bildsektor befindet.

Beispielsweise kann die Schleifspurstruktur demjenigen Bildsektor zugeordnet werden, in dem sich ein bestimmter Prozentsatz der Fläche der Schleifspurstruktur für eine vordefinierte Zeit (bspw. wenige Sekunden) befindet. Ein Vorteil eines derartigen Zuordnens basierend auf der vordefinierten Zeit kann es sein, dass das Detektieren besonders schnell erfolgen kann.

In einem weiteren Aspekt kann das Verfahren ein Ermitteln einer Perspektivenkorrektur basierend auf dem zumindest einen Bild umfassen. Das Verfahren kann ein Anpassen des zumindest einen Bildes mittels der Perspektivenkorrektur umfassen.

Mittels der Perspektivenkorrektur kann ein von einem optischen Sensor erfasstes Bild derart angepasst werden, dass das korrigierte Bild eine orthografische Projektion der bearbeiteten Fläche darstellt. Mit anderen Worten kann ein Bild in Vogelperspektive in ein Bild in Draufsicht transformiert werden. Die Perspektivenkorrektur kann das Detektieren der Schleifspur verbessern, weil die Schleifspurstruktur in einer Draufsicht besser vorhersehbare Formen aufweisen kann. Beispielsweise kann angenommen werden, dass die Schleifspurstruktur in einer Draufsicht im Wesentlichen eine Rechteckform aufweist. Ferner kann ein korrigiertes Bild einfacher verarbeitet werden.

In einem weiteren Aspekt kann das Verfahren ein Ermitteln der Position der detektierten Schleifspur umfassen. Das Verfahren kann ferner ein Bestimmen, ob die Position der detektierten Schleifspur innerhalb einer durch das Vorsatzgerät bearbeiteten landwirtschaftlichen Fläche liegt, umfassen.

Das Vorsatzgerät kann eine Vorsatzbreite aufweisen. Mit anderen Worten kann die Vorsatzbreite eine in einer Richtung orthogonal zur Fahrtrichtung der landwirtschaftlichen Arbeitsmaschine gemessene Distanz sein. Es ist möglich, dass die Schleifspur außerhalb der Vorsatzbreite liegt. Liegt die Schleifspur außerhalb der Vorsatzbreite, wird die Schleifspur möglicherweise nicht durch das Vorsatzgerät verursacht. Liegt die Position der detektierten Schleifspur innerhalb einer durch das Vorsatzgerät bearbeiteten landwirtschaftlichen Fläche, kann davon ausgegangen werden, dass die Schleifspur durch das Vorsatzgerät verursacht wird.

In einem weiteren Aspekt kann das Verfahren ein Übermitteln einer Information über die detektierte Schleifspur an einen Bediener der landwirtschaftlichen Arbeitsmaschine umfassen.

Beispielsweise kann die Information über die detektierte Schleifspur in Form eines Signaltons (d.h. ein akustisches Signal) oder einer Warnmeldung ausgegeben werden. Es ist auch möglich, dass die detektierte Schleifspur auf einer Ausgabeeinheit dargestellt wird. Beispielsweise kann eine Information in Form einer Aufnahme der Schleifspur aus Birdview-Ansicht oder aus Perspektive des Fahrers dargestellt werden. Dadurch kann dem Bediener der landwirtschaftlichen Arbeitsmaschine mitgeteilt werden, dass eine Schleifspur vorliegt und somit Handlungsbedarf besteht. Basierend auf der Information kann auch eine Weisung bzw. Aufforderung (auch Abhilfemaßnahme genannt) an den Bediener ausgegeben werden. Es ist auch möglich, dass nach dem Übermitteln der Information automatisch mittels Aktoren eine Abhilfemaßnahme in die Wege geleitet wird. Mit anderen Worten kann mittels des Verfahrens eine Handlungsempfehlung ausgegeben oder aktorisch in den Ernteprozess eingegriffen werden. Auch eine Kombination von aktorischen und manuellen Handlungen ist möglich.

In einem weiteren Aspekt kann das Verfahren ein Erfassen einer Vielzahl von Bildern der bearbeiteten Fläche mittels des optischen Sensors umfassen. Das Verfahren kann ein Detektieren der Schleifspur des Vorsatzgeräts umfassen. Dabei kann die Schleifspur detektiert werden, indem Schleifspurstrukturen in der Vielzahl von Bildern segmentiert werden, ein Qualität-Score basierend auf den segmentierten Schleifspurstrukturen ermittelt wird und der Qualität-Score einen vordefinierten Schwellwert erreicht.

Der Qualitäts-Score kann die Sicherheit angeben, mit der die gefundene Instanz (bspw. eine Schleifspurstruktur) tatsächlich vorliegt. So kann eine Vorbeugung von Falsch-Positiven Instanzen möglich sein. Tritt beispielsweise in einem Bild eine Schleifspur auf, so wird bei einer beispielhaften Bildfrequenz von 20 bis 30 Bildern pro Sekunde diese Spur im nächsten Bild möglicherweise nicht verschwunden sein. Vor der Ausgabe der CAN Botschaften, welche z.B. sekündlich ausgegeben werden können, oder in einem Intervall, welches länger als die Bildfrequenz des optischen Sensors ist, können die Prädiktionen mehrerer Bilder betrachtet werden. Ist dieselbe Instanz beispielsweise auf mehreren Bildern zu sehen, so wird ein prozentualer Score berechnet, welcher sich aus der prozentualen Anzahl der Bilder mit derselben Instanz ergibt. Liegt der Score oberhalb eines Schwellwertes, beispielsweise 80%, so kann eine Handlung des nachfolgenden Automaten erlaubt werden. Optional ist auch eine Empfindlichkeit des Systems denkbar, welche den Schwellwert des Qualitäts-Scores durch den Bediener wählbar macht. Der vordefinierte Schwellwert (bspw. Schleifspurintensität, d.h. Breite, Länge, Anzahl der Schleifspur/en) kann vom Fahrerverhalten gelernt werden. Hebt der Fahrer den Vorsatz beispielsweise manuell bei einer Schleifspur unterhalb eines bestimmten Qualität-Scores an, so kann der Qualität-Score zukünftig reduziert werden.

Analog zur Detektion der Schleifspur lassen sich auch die Klassen "Erntegut liegend" und "Stoppelfeld" bestimmen, wobei diese Klassen nicht als Schleifspur zu verstehen sind. Vorteilhafterweise kann durch die weiteren Klassen besser abgegrenzt werden, ob eine Schleifspur vorliegt. Der Bildbereich, welcher das Stoppelfeld zeigt, kann mittels Kantendetektion bearbeitet werden. Hierbei können gängige Verfahren wie Canny-Operatoren, Sobel-Operatoren oder andere Verfahren zur Kantendetektion eingesetzt werden. Längere, zusammenhängende Kanten in vertikaler Richtung können anschließend als Stoppelfeld betrachtet werden, kürzere und horizontale Kanten können vernachlässigt werden. Die Schleifspur (d.h. Position und Größe) und die weiteren Klassen können ferner in einer Karte gespeichert werden und an nachfolgende Arbeitsprozesse (z.B. Stoppelbearbeitung) übertragen werden, um diese zu optimieren.

In einem weiteren Aspekt kann das Verfahren umfassen, dass die landwirtschaftliche Arbeitsmaschine eingestellt wird, indem eine Arbeitshöhe des Vorsatzgerätes verändert wird.

Beispielsweise kann die Steuerungseinheit eingerichtet sein, Befehle auszugeben, die Arbeitshöhe des Vorsatzgeräts zu korrigieren. Weiter beispielsweise kann die Steuerungseinheit eingerichtet sein, bei Detektieren bzw. Erkennen der Schleifspur die Arbeitshöhe des Vorsatzgeräts vorübergehend zu erhöhen. Das kann heißen, dass die Arbeitshöhe des Vorsatzgeräts erhöht wird, wenn die Schleifspurstruktur in zumindest einem Bild ermittelt wurde.

Ein weiterer Aspekt bezieht sich auf eine landwirtschaftliche Arbeitsmaschine mit einem Vorsatzgerät zum Bearbeiten einer landwirtschaftlichen Fläche und einem optischen Sensor zum Erfassen einer bearbeiteten Fläche. Dabei kann der optische Sensor eingerichtet sein, zumindest ein Bild der bearbeiteten Fläche zu erfassen. Dabei kann die landwirtschaftliche Arbeitsmaschine eine Steuerungseinheit aufweisen. Ferner kann die Steuerungseinheit eingerichtet sein, eine Schleifspur des Vorsatzgeräts zu detektieren, indem eine Schleifspurstruktur in dem zumindest einen Bild segmentiert wird. Des Weiteren kann die Steuerungseinheit eingerichtet sein, die landwirtschaftliche Arbeitsmaschine basierend auf der Schleifspurstruktur einzustellen, so dass die detektierte Schleifspur zumindest teilweise verringert wird.

Mit anderen Worten kann die landwirtschaftliche Arbeitsmaschine eingerichtet sein, eine der hierin offenbarten Verfahren auszuführen. Dafür kann die landwirtschaftliche Arbeitsmaschine beispielsweise weitere elektronische Komponenten aufweisen, die ein hierin beschriebenes computer-implementiertes Verfahren durchführen.

In einem weiteren Aspekt kann der optische Sensor an einem in Fahrtrichtung hinteren Teil der landwirtschaftlichen Arbeitsmaschine angeordnet sein. Der optische Sensor kann ferner derart ausgerichtet sein, dass er einen Blickwinkel auf die bearbeitete Fläche hat. Dabei kann die Steuerungseinheit eingerichtet sein, den Blickwinkel zu erfassen und eine Perspektivenkorrektur zu ermitteln.

In einem weiteren Aspekt kann die landwirtschaftliche Arbeitsmaschine eine Ausgabeeinheit aufweisen. Dabei kann die Steuerungseinheit eingerichtet sein, Information über die detektierte Schleifspur an die Ausgabeeinheit zu übermitteln.

In einem weiteren Aspekt kann die Steuerungseinheit eingerichtet sein, eine Arbeitshöhe des Vorsatzgerätes zu verändern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:
- Fig. 1: eine schematische Darstellung einer landwirtschaftlichen Maschine in einer Seitenansicht gemäß einer Ausführungsform;
- Fig. 2: die landwirtschaftliche Maschine in einer Draufsicht gemäß einer Ausführungsform;
- Fig. 3: eine schematische Darstellung einer bearbeiteten Fläche aus Sicht eines optischen Sensors der landwirtschaftlichen Arbeitsmaschine gemäß einer Ausführungsform;
- Fig. 4a: ein Bild der bearbeiteten Fläche hinter dem Feldhäcksler, aufgenommen vom optischen Sensor am Heck des Feldhäckslers gemäß einer Ausführungsform;
- Fig. 4b: eine im Bild der Fig. 4a segmentierte Schleifspurstruktur gemäß einer Ausführungsform;
- Fig. 5: eine schematische Darstellung eines Verfahrens zum Einstellen einer landwirtschaftlichen Arbeitsmaschine gemäß einer Ausführungsform;
- Fig. 6a: das Bild der Fläche hinter dem Feldhäcksler mit der Schleifspur und der Schleifspurstruktur gemäß einer Ausführungsform;
- Fig. 6b: das Bild der Fläche hinter dem Feldhäcksler mit der Schleifspur und der Schleifspurkonturen gemäß einer Ausführungsform;
- Fig. 7a: das mittels Perspektivenkorrektur angepasste Bild mit der Schleifspur gemäß einer Ausführungsform;
- Fig. 7b: die im Bild der Fig. 7a segmentierte Schleifspurstruktur gemäß einer Ausführungsform; und
- Fig. 8: das mittels Perspektivenkorrektur angepasste Bild mit Teilungslinien und Bildsektoren gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

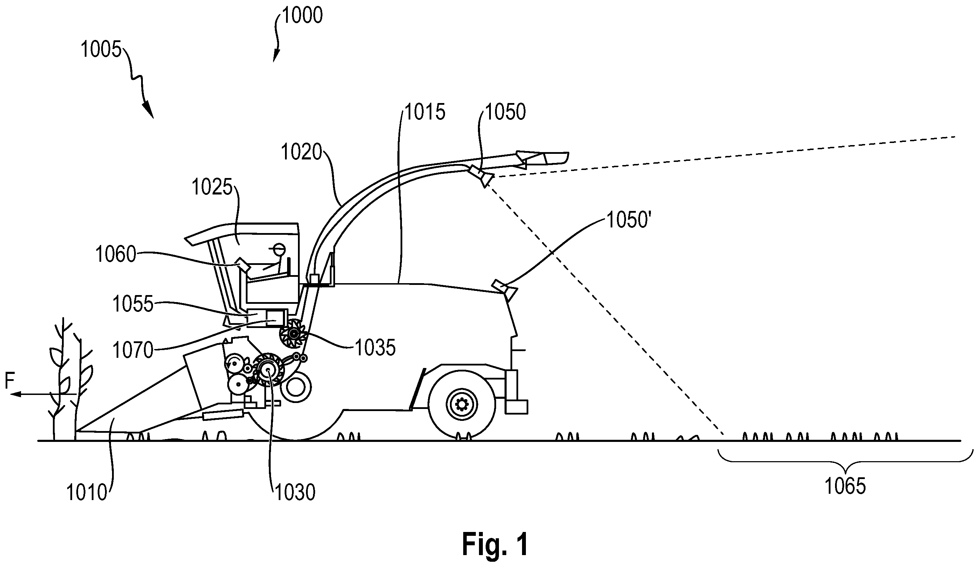

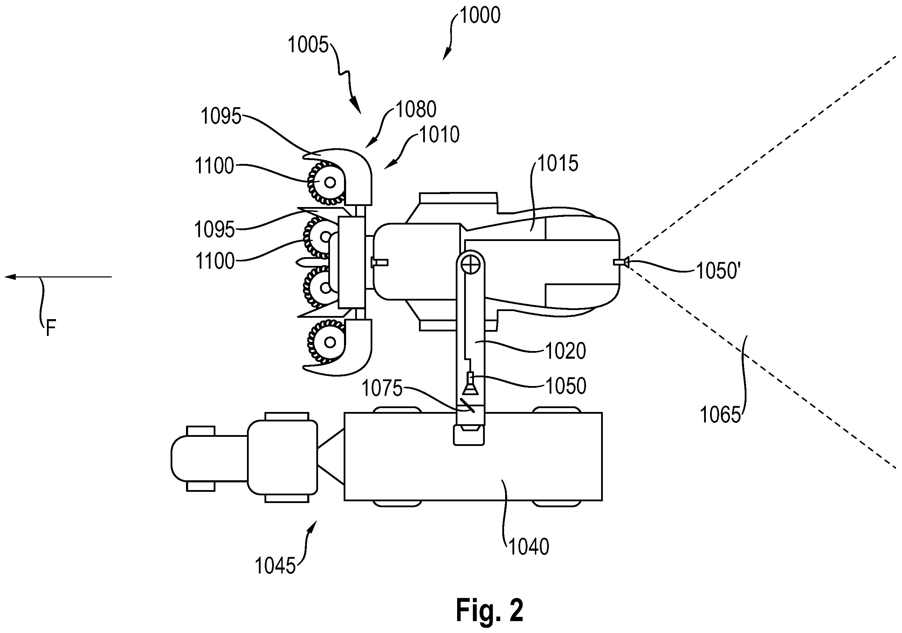

Fig. 1 und 2 zeigen in einer Seitenansicht und einer Draufsicht einen Feldhäcksler 1005 als bevorzugtes Beispiel einer landwirtschaftlichen Maschine 1000 in einer Seitenansicht und einer Draufsicht. Der Feldhäcksler 1005 dient zur Aufnahme, Zerkleinerung und Verladung von Erntegut wie Gras, Luzerne oder Mais, insbesondere bei der Bereitung von Silage bzw. Ganzpflanzensilage. Daneben erlangt der Feldhäcksler 1005 in letzter Zeit wachsende Bedeutung bei der Ernte nachwachsender Rohstoffe. Ein weiteres Einsatzgebiet ist das Häckseln von Stroh.

Der Feldhäcksler 1005 hat eine starre Karosserie 1015, an der ein Vorsatzgerät 1010, typischerweise ein Maisgebiss, höhenverstellbar und ein Auswurfkrümmer 1020 um eine vertikale Achse schwenkbar angebracht sind. Innerhalb der Karosserie 1015, unterhalb einer Fahrerkabine 1025, sind ein Häckselwerk 1030 und ein Nachbeschleuniger 1035 untergebracht. In an sich bekannter Weise dient ersteres zum Zerkleinern des vom Vorsatzgerät 1010 zugeführten Ernteguts und letzterer zum Beschleunigen des so erhaltenen Häckselguts auf eine zum Durch laufen des Auswurfkrümmers 1020 erforderliche Geschwindigkeit. Das Vorsatzgerät 1010 kann mehrere jeweils von Halmteilern 1095 flankierte Rotoren 1100 aufweisen.

Fig. 1 zeigt den Auswurfkrümmer 1020 in einer nach hinten, entgegen der normalen Fahrtrichtung F ausgestreckten Orientierung. In Fig. 2 ist der Auswurfkrümmer 1020 um 90° zur Seite geschwenkt, um das Häckselgut auf eine Ladefläche 1040 eines neben dem Feldhäcksler 1005 fahrenden Begleitfahrzeugs 1045 auszugeben.

Ein optischer Sensor 1050 (bspw. eine Rückfahrkamera) zur Überwachung des von der Fahrerkabine 1025 aus schlecht oder gar nicht einsehbaren Raums hinter dem Feldhäcksler 1005 ist einer ersten Ausgestaltung zufolge an dem Auswurfkrümmer 1020 montiert. Der optische Sensor 1050 ist über eine Steuerungseinheit 1055 mit einer Ausgabeeinheit 1060 in der Fahrerkabine 1025 verbunden. Die Steuerungseinheit 1055 ist eingerichtet, wenn der Feldhäcksler 1005 vorwärts oder rückwärts fährt, Bilder von dem optischen Sensor 1050 auf der Ausgabeeinheit 1060 wiederzugeben. Ferner kann die Steuerungseinheit 1055 eingerichtet sein, eine Schleifspur des Vorsatzgeräts 1010 zu detektieren, indem eine Schleifspurstruktur in einem Bild segmentiert wird. Des Weiteren kann die Steuerungseinheit 1055 eingerichtet sein, die landwirtschaftliche Arbeitsmaschine 1000 bzw. das Vorsatzgerät 1010 basierend auf der Schleifspurstruktur einzustellen, so dass die detektierte Schleifspur zumindest teilweise verringert wird.

Wenn sich der Feldhäcksler 1005 im Erntebetrieb in Fahrtrichtung F vorwärtsbewegt, muss sich der Auswurfkrümmer 1020 in einer zur Seite geschwenkten Stellung wie in Fig. 2 befinden, damit das Häckselgut kontinuierlich vom Feldhäcksler 1005 zum Begleitfahrzeug 1045 umgeladen werden kann. Damit der optische Sensor 1050 in diesem Betriebszustand eine abgeerntete Fläche 1065 hinter dem Feldhäcksler 1005 überwachen kann, kann er seinerseits schwenkbar am Auswurfkrümmer 1020 montiert sein, um jeweils gegensinnig zum Auswurfkrümmer 1020 zu rotieren und unabhängig von dessen Schwenkstellung eine Blickrichtung nach hinten beibehalten zu können.

Einer ersten Alternative zufolge weist der optische Sensor 1050 einen so großen Blickwinkel auf, dass die Fläche 1065 hinter dem Feldhäcksler 1005 auch dann noch in ihrem Blickfeld liegt, wenn sie am Auswurfkrümmer 1020 unbeweglich montiert ist und der Auswurfkrümmer 1020 wie in Fig. 2 gezeigt zur Seite geschwenkt ist. In diesem Fall zeigt die Ausgabeeinheit 1060 nur jeweils einen Ausschnitt aus den von dem optischen Sensor 1050 aufgenommenen Bildern, wobei der Ausschnitt von der Steuerungseinheit 1055 so festgelegt sein kann, das beim Rückwärtsfahren sowie beim Vorwärtsfahren im Erntebetrieb im Wesentlichen dieselbe Fläche 1065 hinter dem Feldhäcksler 1005 zu sehen ist.

Wenn bei dieser ersten Alternative der Auswurfkrümmer 1020 sich in der Stellung der Fig. 2 befindet, liegt auch ein wesentlicher Teil der Ladefläche 1040 im Blickfeld des optischen Sensors 1050, so dass diese auch zum Überwachen des Überladens zum Begleitfahrzeug 1045 eingesetzt werden kann. Zu diesem Zweck unterstützt die Steuerungseinheit 1055 zwei Betriebszustände der Ausgabeeinheit 1060, einen ersten, in dem der vom Auswurfkrümmer 1020 ausgeworfene Strahl von Häckselgut und dessen Auftreffort auf der Ladefläche 1040 zu sehen ist, und einen zweiten, in dem die Fläche 1065 hinter dem Feldhäcksler 1005 zu sehen ist.

Da die Steuerungseinheit 1055 jeweils das gesamte Bild des optischen Sensors 1050 empfängt, ist eine Bildverarbeitungseinheit 1070 der Steuerungseinheit 1055 jederzeit in der Lage, den Teil des Bildes auszuwerten, in dem die Fläche 1065 hinter dem Feldhäcksler 1005 dargestellt ist.

Einer zweiten Alternative zufolge ist der optische Sensor 1050 zusammen mit dem Auswurfkrümmer 1020 schwenkbar, so dass, wenn der Auswurfkrümmer 1020 wie in Fig. 2 zur Seite geschwenkt ist, das Blickfeld des optischen Sensors 1050 mit geschwenkt ist und anstatt der Fläche hinter dem Feldhäcksler 1005 die Ladefläche 1040 dieses Blickfeld ausfüllt. Um dennoch eine Überwachung der Fläche hinter dem Feldhäcksler 1005 zu ermöglichen, ist ein Spiegel 1075 vorgesehen, der vor dem optischen Sensor 1050 geschwenkt werden kann, um deren Blick wieder auf die Fläche 1065 hinter dem Feldhäcksler 1005 zu lenken. Der Spiegel 1075 kann zeitweilig vor dem optischen Sensor 1050 platziert werden, so dass deren Bilder abwechselnd den Häckselgutstrahl und die Fläche 1065 hinter dem Feldhäcksler 1005 zeigen; denkbar ist auch, dass der Spiegel 1075, solange der Auswurfkrümmer 1020 zur Seite geschwenkt ist, so platziert ist, dass jeweils in einem Teil des Blickfelds der Häckselgutstrahl und im anderen die Fläche hinter dem Feldhäcksler 1005 zu sehen ist.

Einer dritten Alternative zufolge kann ein optischer Sensor 1050' an einem in Fahrtrichtung F hinteren Teil der landwirtschaftlichen Arbeitsmaschine 1000 angeordnet sein, d.h. der optische Sensor 1050' kann am Heck der Karosserie 1015 montiert sein. Die Funktion des optischen Sensors 1050 am Auswurfkrümmer 1020 kann dann auf das Überwachen des Häckselgutstroms beschränkt sein. Der optische Sensor 1050' kann ferner derart ausgerichtet sein, dass sie einen bestimmten Blickwinkel auf die bearbeitete Fläche 1065 hat. Dabei kann die Steuerungseinheit 1055 eingerichtet sein, den Blickwinkel zu erfassen und eine Perspektivenkorrektur zu ermitteln.

In jeder dieser Alternativen stehen während eines Erntevorgangs - ggf. nach geeigneter Platzierung des Spiegels 1075 - Bilder der Fläche 1065 hinter dem Feldhäcksler 1005 jederzeit zur Verfügung. Diese Bilder werden von der Bildverarbeitungseinheit 1070 in Echtzeit auf mögliche Schleifspuren untersucht.

Wenn die Bildverarbeitungseinheit 1070 eine Schleifspur erkennt, gibt sie ein Fehlersignal an die Steuerungseinheit 1055 weiter, und diese löst daraufhin eine Abhilfemaßnahme aus. Der obere und untere Grenzwert für das Vorsatzgerät 1010 (oder für das Fehlersignal) sowie die bei einer detektierten Schleifspur zu treffende Abhilfemaßnahme können vom Bediener festlegbar sein.

Im Falle einer Unter- bzw. Überschreitung eines Grenzwerts kann die Abhilfemaßnahme darin bestehen, dass die Steuerungseinheit 1055 die Höhe des Vorsatzgeräts 1010 über dem Boden mit Hilfe eines Stellglieds 1080 korrigiert, bis die Grenzwerte wieder eingehalten sind. Eine solche Korrektur kann vollautomatisch, ohne Beteiligung des Bedieners, vorgenommen werden. Alternativ kann das Vorliegen des Fehlersignals dazu führen, dass die Bilder des optischen Sensors 1050, 1050' auf der Ausgabeeinheit 1060 durchgeschaltet werden, ggf. zusammen mit einem Hinweis auf die Richtung einer von der Steuerungseinheit 1055 beabsichtigten Höhenkorrektur, und diese erst nach Genehmigung durch den Bediener vorgenommen wird.

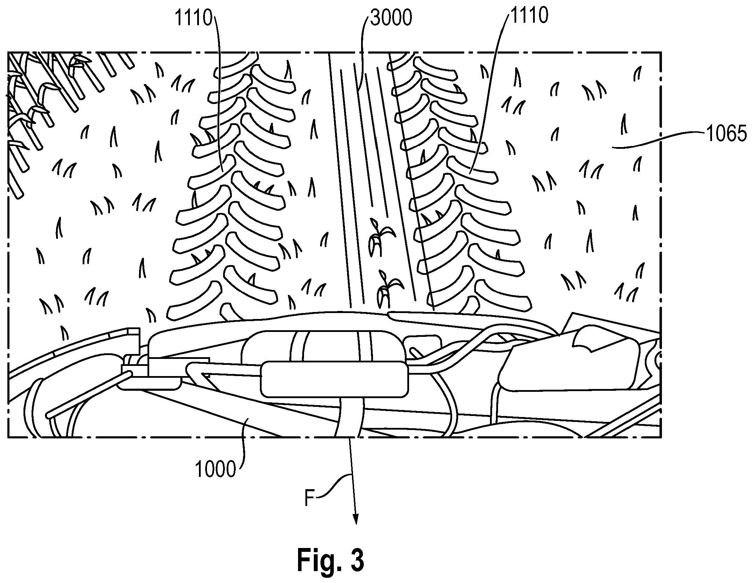

Fig. 3 zeigt eine schematische Darstellung einer bearbeiteten Fläche 1065 aus Sicht eines optischen Sensors 1050 der landwirtschaftlichen Arbeitsmaschine 1000 gemäß einer Ausführungsform.

Der optische Sensor 1050' kann die bearbeitete Fläche 1065 als Bild erfassen und auf der Ausgabeeinheit 1060 wiedergeben. Das sogenannte "Nachfeld" (d.h. die bearbeitete Fläche 1065) kann sich dabei im Sichtbereich bzw. Messbereich des optischen Sensors 1050' befinden. Die bearbeitete Fläche 1065 weist Reifenspuren 1110 auf; diese sind unvermeidlich; aufgrund ihres regelmäßigen Musters von Stollenabdrücken sind sie für die Bildverarbeitungseinheit 1070 leicht zu identifizieren und als irrelevant auszuscheiden. Zwischen den Reifenspuren 1110 erstreckt sich eine Schleifspur 3000. Die Schleifspur 3000 kann für die Bildverarbeitungseinheit 1070 beispielsweise an ihrer gleichmäßig langgestreckten Struktur zu erkennen sein. Grund für die Schleifspur 3000 kann ein einzelner Erdbrocken sein, an den das Vorsatzgerät 1010 angestoßen ist und der in der Folge vom Vorsatzgerät 1010 über die Bodenoberfläche ausgeschmiert wird. Wenn eine solche Schleifspur 3000 erkannt wird, kann die Steuerungseinheit 1055 sie beenden, indem das Vorsatzgerät 1010 kurz mit Hilfe des Stellglieds 1080 angehoben wird, bis die Reste des Erdklumpens hinter ihm liegen, und dann wieder abgesenkt wird.

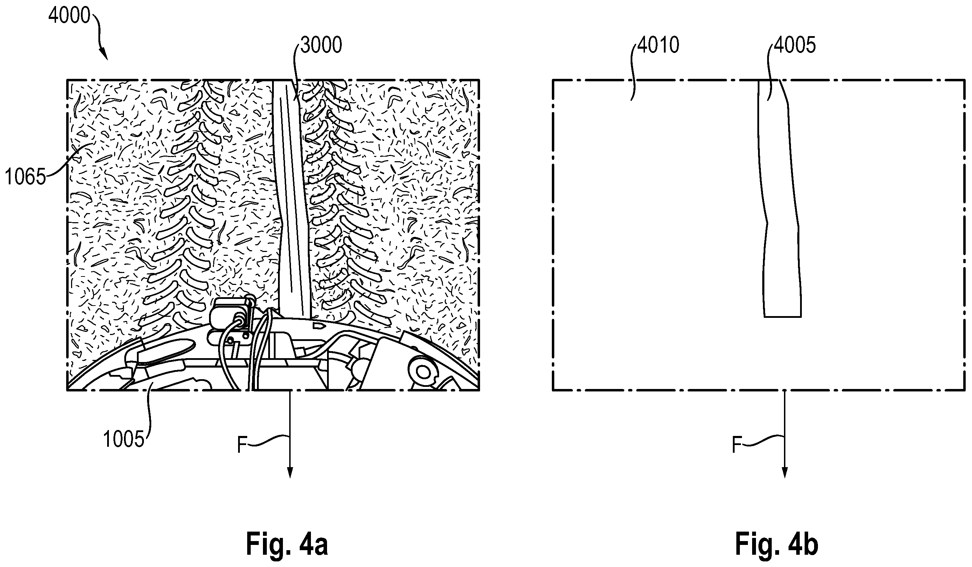

Fig. 4a zeigt ein Bild 4000 der bearbeiteten Fläche 1065 hinter dem Feldhäcksler 1005, aufgenommen vom optischen Sensor 1050' am Heck des Feldhäckslers 1005 gemäß einer Ausführungsform. Es liegt ferner eine Schleifspur 3000 vor. Bei der Schleifspur 3000 handelt es sich um eine Spur, die beispielsweise durch das Vorsatzgerät 1010 verursacht sein kann, indem das Vorsatzgerät 1010 oder ein Teil des Vorsatzgeräts 1010 (bspw. Halmteiler 1095 oder Rotoren 1100) während der Fahrt der landwirtschaftlichen Arbeitsmaschine 1000 den Boden berührt und dabei aufgrund der Berührung eine Spur hinterlässt.

Fig. 4b zeigt eine im Bild 4000 der Fig. 4a segmentierte Schleifspurstruktur 4005. Neben der Schleifspurstruktur 4005 kann eine Hintergrundstruktur 4010 ermittelt werden. Die Schleifspurstruktur 4005 und die Hintergrundstruktur 4010 können eine Segmentierungsmaske bilden.

Die segmentierte Schleifspurstruktur 4005 kann über eine zusammenhängende Pixelfläche segmentiert werden. Instanzen weiterer Klassen können andersfarbig dargestellt werden. Die segmentierte Schleifspurstruktur 4005 und die weiteren Instanzen sind eindeutig voneinander unterscheidbar. Die in Fig 4a und 4b dargestellte Aufnahme zeigt einen möglichen Blickwinkel, alternativ sind jedoch auch vergleichbare Anbaupositionen denkbar, welche das Nachfeld darstellen. Vor allem Kamerapositionen, welche einen größeren Bereich des Nachfeldes durch einen flacheren Nickwinkel des optischen Sensors 1050' bedeuten, wären ebenfalls denkbar. Es kann nach jeder Aufnahme und jeder Segmentierung eine Perspektivenkorrektur stattfinden, welche möglicherweise durch eine einmalige Kalibrierung (seitens des Herstellers, nicht des Bedieners) bestimmt wird. Hierfür wird über Kalibrierungsaufnahmen die Extrinsik und die Intrinsik des optischen Sensors 1050, 1050' bzw. der (Rückfahr-)Kamera bestimmt.

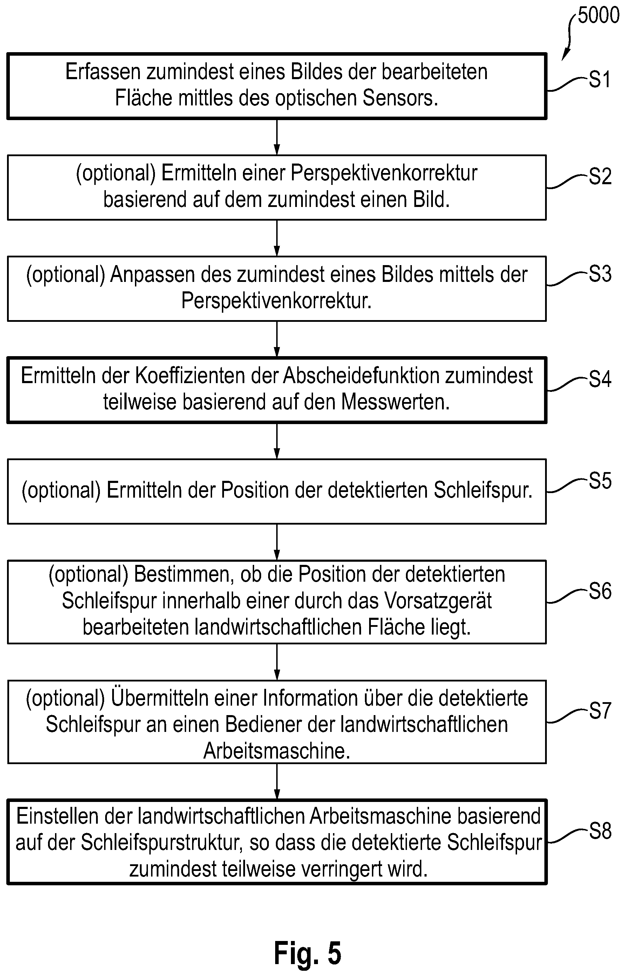

Fig. 5 zeigt eine schematische Darstellung eines Verfahrens 5000 zum Einstellen einer landwirtschaftlichen Arbeitsmaschine 1000 gemäß einer Ausführungsform.

In einem Schritt S1 des Verfahrens kann zumindest eines Bildes 4000 der bearbeiteten Fläche 1065 mittels des optischen Sensors 1050, 1050' erfasst werden. Es ist dabei auch möglich, dass eine Vielzahl von Bildern 4000 in Form eines Videos der bearbeiteten Fläche 1065 mittels des optischen Sensors 1050, 1050' erfasst wird.

In einem weiteren optionalen Schritt S2 des Verfahrens kann eine Perspektivenkorrektur basierend auf dem zumindest einen Bild 4000 bestimmt werden.

In einem weiteren optionalen Schritt S3 kann das zumindest eine Bild 4000 mittels der Perspektivenkorrektur angepasst werden.

In einem weiteren Schritt S4 kann eine Schleifspur 3000 des Vorsatzgeräts 1010 detektiert werden, indem eine Schleifspurstruktur 4005 in dem zumindest einen Bild 4000 segmentiert wird. Hierbei wird semantische Bildsegmentierung mittels CNN (Convolutional Neural Networks) durchgeführt, wobei z.B. eine UNET Architektur mit einem Feature Extractor bzw. Backbone bestehend aus z.B. der mobileNet Architektur denkbar wären. Alternativ sind auch vergleichbare Architekturen denkbar, sowie klassische Verfahren zur Segmentierung von Bildern. Ein CNN (auch "Modell" genannt) ermöglicht die Segmentierung folgender Klassen: "Hintergrund", "Schleifspur", "Erntegut liegend" und "Stoppelfeld". Alternativ sind auch weitere Klassen oder eine Untermenge der oben genannten Klassen denkbar.

Dabei kann die Schleifspur 3000 des Vorsatzgeräts 1010 detektiert werden, indem Schleifspurstrukturen 4005 in der Vielzahl von Bildern 4000 segmentiert werden. Daraufhin kann ein Qualität-Score basierend auf den segmentierten Schleifspurstrukturen 4005 ermittelt werden. Sobald der Qualität-Score einen vordefinierten Schwellwert erreicht, kann davon ausgegangen werden, dass die Schleifspur 3000 tatsächlich vorliegt. Der Qualitäts-Score gibt dabei beispielsweise die Sicherheit an, mit der die detektierte Schleifspur 3000 tatsächlich vorliegt. So kann möglicherweise eine Vorbeugung von Falsch-Positiven Instanzen möglich sein.

Das Detektieren der Schleifspur 3000 kann umfassen, dass das zumindest eine Bild 4000 in Bildsektoren mittels Teilungslinien unterteilt wird. Die Teilungslinien können im Wesentlichen parallel zu einer Fahrtrichtung F der landwirtschaftlichen Arbeitsmaschine 1000 ausgerichtet sein. Ferner kann die Schleifspurstruktur 4005 einem der Bildsektoren zugeordnet werden. Die landwirtschaftliche Arbeitsmaschine 1000 kann eingestellt werden, indem eine Arbeitshöhe des Vorsatzgerätes 1010 verändert wird.

In einem weiteren optionalen Schritt S5 kann die Position der detektierten Schleifspur 3000 ermittelt werden.

In einem weiteren optionalen Schritt S6 kann bestimmt werden, ob die Position der detektierten Schleifspur 3000 innerhalb einer durch das Vorsatzgerät 1010 bearbeiteten landwirtschaftlichen Fläche 1065 liegt.

In einem weiteren optionalen Schritt S7 kann eine Information über die detektierte Schleifspur 3000 an einen Bediener der landwirtschaftlichen Arbeitsmaschine 1000 übermittelt werden.

In einem weiteren Schritt S8 kann die landwirtschaftliche Arbeitsmaschine 1000 basierend auf der Schleifspurstruktur 4005 eingestellt werden, so dass die detektierte Schleifspur 3000 zumindest teilweise verringert wird.

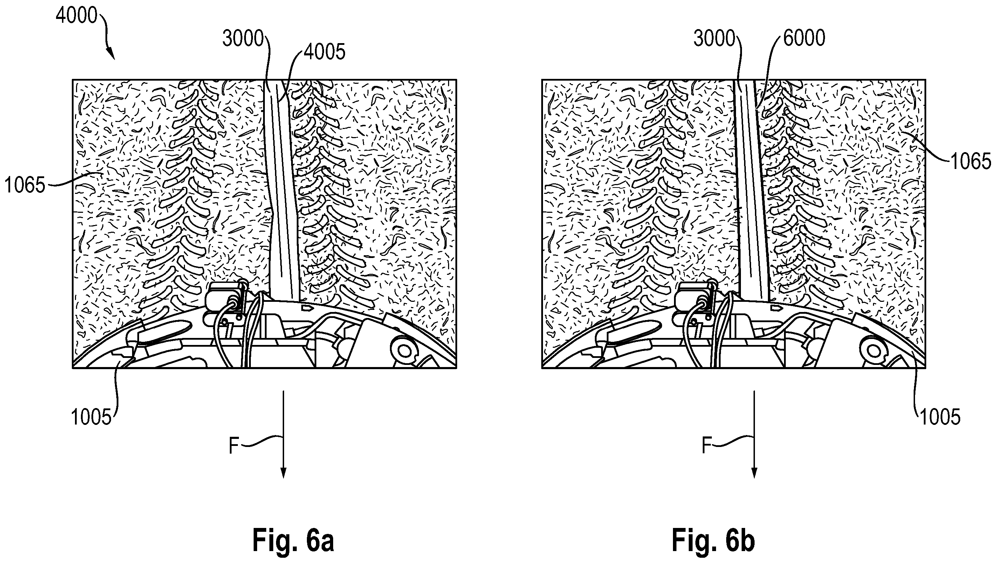

Fig. 6a zeigt das Bild 4000 der Fläche 1065 hinter dem Feldhäcksler 1005 mit der Schleifspur 3000 und der Schleifspurstruktur 4005. Das Bild 4000 kann dem Bediener des Feldhäckslers 1005 über die Ausgabeeinheit 1060 bereitgestellt werden. Wenn der Bediener die Schleifspur 3000 erfasst, kann er direkt Handlungsmaßnahmen in die Wege leiten, um die Schleifspur 3000 zu beseitigen.

Fig. 6b zeigt das Bild 4000 der Fläche 1065 hinter dem Feldhäcksler 1005 mit der Schleifspur 3000 und der Schleifspurkonturen 6000. Vorteilhafterweise kann somit das Bild 4000 erkennbar sein und lediglich die Schleifspurkonturen 6000, d.h. Konturen einer möglichen Schleifspur 3000, können optisch markiert sein.

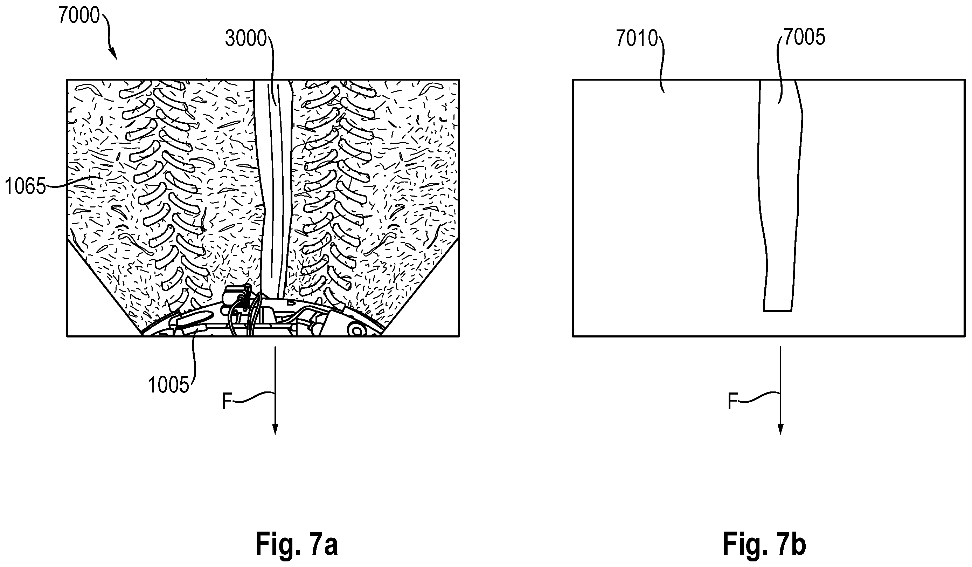

Fig. 7a zeigt das mittels Perspektivenkorrektur angepasste Bild 7000 mit der Schleifspur 3000.

Zur Perspektivenkorrektur kann eine vorab ermittelte Kalibrierungsmatrix zum Einsatz kommen. Hierdurch können vor allem mögliche Verzerrungen sensorseitig bzw. kameraseitig (Pillow- oder Barrel Effekt), sowie Perspektivenverzerrungen kompensiert werden. Weiter entfernte Objekte erscheinen somit nicht mehr kleiner und die Verortung im Maschinenkoordinatensystem ist möglich. Durch einen Umrechnungsfaktor von Pixel zu Meter, sowohl in x- als auch in y-Richtung, sind auch absolute Abstände bestimmbar. Auf Grundlage der Bildmaske sind sowohl die Pixelfläche eines Polygons als auch die Koordinaten bestimmbar. Diese werden für weiterführende Berechnungen und Auswertungen verwendet.

Fig. 7b zeigt die im Bild 7000 der Fig. 7a segmentierte Schleifspurstruktur 7005. Die Segmentierung findet nach einem der vorgehend beschriebenen Verfahren statt.

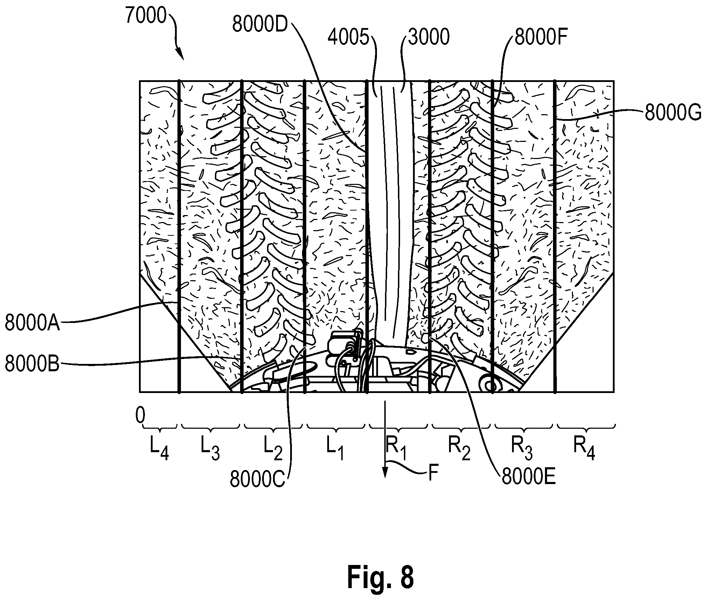

Fig. 8 zeigt das mittels Perspektivenkorrektur angepasste Bild 7000 mit Teilungslinien 8000A-G und Bildsektoren L1-L4 und R1-R4.

Die Teilungslinien 8000A-G können im Wesentlichen parallel zur Fahrtrichtung F der landwirtschaftlichen Arbeitsmaschine 1000 ausgerichtet sein. Ferner kann das Verfahren ein Zuordnen der Schleifspurstruktur 4005 zu einem der Bildsektoren L1-L4 oder R1-R4 umfassen. Im vorliegenden Fall kann die Schleifspurstruktur 4005 dem Bildsektor R1 zugewiesen werden.

Das hierin beschriebene Verfahren sieht optional eine Einteilung des Nachfeldes in acht Bildsektoren L1-L4 und R1-R4 vor, jeweils vier Bildsektoren rechts und links vom Maschinenmittelpunkt. Dabei wäre auch eine andere Anzahl von Bildsektoren denkbar, ebenso wie eine Einführung von horizontalen Bildsektoren. Trifft eine Schleifspurstruktur 4005 beispielsweise im Sektor R1 auf, so wird dies über CAN Botschaft ausgegeben, ebenso wie die Breite, die Länge und die Fläche der Schleifspurstruktur 4005. Die Länge und die Breite werden dabei jeweils über die das Polygon einschließende Bounding-box ermittelt. Befindet sich ein Polygon in mehreren Bildsektoren, so wird es in der CAN Botschaft in mehreren Bildsektoren ausgewiesen.

### Bezugszeichenliste

- 1000: landwirtschaftliche Arbeitsmaschine
- 1005: Feldhäcksler
- 1010: Vorsatzgerät
- 1015: Karosserie
- 1020: Auswurfkrümmer
- 1025: Fahrerkabine
- 1030: Häckselwerk
- 1035: Nachbeschleuniger
- 1040: Ladefläche
- 1045: Begleitfahrzeug
- 1050, 1050': optischer Sensor
- 1055: Steuerungseinheit
- 1060: Ausgabeeinheit
- 1065: bearbeitete Fläche
- 1070: Bildverarbeitungseinheit
- 1075: Spiegel
- 1080: Stellglied
- 1100: Rotor
- 1110: Reifenspur
- 1115: Schleifspur
- 1120: Markierung
- 3000: Schleifspur
- 4000: Bild
- 4005: Schleifspurstruktur
- 4010: Hintergrundstruktur
- 5000: Verfahren
- 6000: Schleifspurkontur
- 7000: Bild nach Perspektivenkorrektur
- 8000A-G: Teilungslinien
- L1-L4: linke Bildsektoren
- R1-R4: rechte Bildsektoren
- F: Fahrtrichtung

## Patentansprüche

1. Verfahren (5000) zum Einstellen einer landwirtschaftlichen Arbeitsmaschine (1000), wobei die landwirtschaftliche Arbeitsmaschine (1000) einen optischen Sensor (1050, 1050') und ein Vorsatzgerät (1010) zum Bearbeiten einer landwirtschaftlichen Fläche umfasst,
das Verfahren (5000) umfassend:
Erfassen zumindest eines Bildes (4000) einer bearbeiteten Fläche (1065) mittels des optischen Sensors (1050, 1050'),
Detektieren einer Schleifspur (3000) des Vorsatzgeräts (1010), indem eine Schleifspurstruktur (4005) in dem zumindest einen Bild (4000) segmentiert wird, und
Einstellen der landwirtschaftlichen Arbeitsmaschine (1000) basierend auf der Schleifspurstruktur (4005), so dass die detektierte Schleifspur (3000) zumindest teilweise verringert wird.

2. Verfahren (5000) nach Anspruch 1,
wobei das Detektieren der Schleifspur (3000) umfasst:
Unterteilen des zumindest einen Bildes (4000) in Bildsektoren mittels Teilungslinien, wobei die Teilungslinien (8000A-G) im Wesentlichen parallel zu einer Fahrtrichtung (F) der landwirtschaftlichen Arbeitsmaschine (1000) ausgerichtet sind, und
Zuordnen der Schleifspurstruktur (4005) zu einem der Bildsektoren (L1-L4, R1-R4).

3. Verfahren (5000) nach Anspruch 2,
wobei die Schleifspurstruktur (4005) einem Bildsektor zugeordnet wird, wenn sich die Schleifspurstruktur (4005) zumindest teilweise für ein vordefinierte Zeit in dem Bildsektor (L1-L4, R1-R4) befindet.

4. Verfahren (5000) nach einem der vorhergehenden Ansprüche,
umfassend:
Ermitteln einer Perspektivenkorrektur basierend auf dem zumindest einen Bild (4000), und
Anpassen des zumindest einen Bildes (4000) mittels der Perspektivenkorrektur.

5. Verfahren (5000) nach einem der vorhergehenden Ansprüche,
umfassend:
Ermitteln der Position der detektierten Schleifspur, und
Bestimmen, ob die Position der detektierten Schleifspur innerhalb einer durch das Vorsatzgerät (1010) bearbeiteten landwirtschaftlichen Fläche liegt.

6. Verfahren (5000) nach einem der vorhergehenden Ansprüche,
umfassend:
Übermitteln einer Information über die detektierte Schleifspur an einen Bediener der landwirtschaftlichen Arbeitsmaschine (1000).

7. Verfahren (5000) nach einem der vorhergehenden Ansprüche,
umfassend:
Erfassen einer Vielzahl von Bildern (4000) der bearbeiteten Fläche mittels des optischen Sensors (1050, 1050'), und
Detektieren der Schleifspur des Vorsatzgeräts (1010), indem Schleifspurstrukturen (4005) in der Vielzahl von Bildern (4000) segmentiert werden, ein Qualität-Score basierend auf den segmentierten Schleifspurstrukturen (4005) ermittelt wird und der Qualität-Score einen vordefinierten Schwellwert erreicht.

8. Verfahren (5000) nach einem der vorhergehenden Ansprüche,
umfassend:
Einstellen der landwirtschaftlichen Arbeitsmaschine (1000), indem eine Arbeitshöhe des Vorsatzgerätes (1010) verändert wird.

9. Landwirtschaftliche Arbeitsmaschine (1000) mit einem Vorsatzgerät (1010) zum Bearbeiten einer landwirtschaftlichen Fläche und einem optischen Sensor (1050, 1050') zum Erfassen der bearbeiteten Fläche (1065), wobei der optische Sensor (1050, 1050') eingerichtet ist, zumindest ein Bild (4000) einer bearbeiteten Fläche (1065) zu erfassen,
wobei die landwirtschaftliche Arbeitsmaschine (1000) eine Steuerungseinheit (1055) aufweist, wobei die Steuerungseinheit (1055) eingerichtet ist,
eine Schleifspur (3000) des Vorsatzgeräts (1010) zu detektieren, indem eine Schleifspurstruktur (4005) in dem zumindest einen Bild (4000) segmentiert wird, und
die landwirtschaftliche Arbeitsmaschine (1000) basierend auf der Schleifspurstruktur (4005) einzustellen, so dass die detektierte Schleifspur (3000) zumindest teilweise verringert wird.

10. Landwirtschaftliche Arbeitsmaschine (1000) nach Anspruch 9,
wobei der optische Sensor (1050, 1050') an einem in Fahrtrichtung (F) hinteren Teil der landwirtschaftlichen Arbeitsmaschine (1000) angeordnet und derart ausgerichtet ist, dass er einen Blickwinkel auf die bearbeitete Fläche (1065) hat,
wobei die Steuerungseinheit (1055) eingerichtet ist, den Blickwinkel zu erfassen und eine Perspektivenkorrektur zu ermitteln.

11. Landwirtschaftliche Arbeitsmaschine (1000) nach Anspruch 9 oder 10,
wobei die landwirtschaftliche Arbeitsmaschine (1000) eine Ausgabeeinheit (1060) aufweist und wobei die Steuerungseinheit (1055) eingerichtet ist, Information über die detektierte Schleifspur (3000) an die Ausgabeeinheit (1060) zu übermitteln.

12. Landwirtschaftliche Arbeitsmaschine (1000) nach einem der Ansprüche 9 bis 11,
wobei die Steuerungseinheit (1055) eingerichtet ist, eine Arbeitshöhe des Vorsatzgerätes (1010) zu verändern.
